(19) 

Europäisches
Patentamt
European
Patent Office
Office européen
des brevets

(11) **EP 1 762 295 A1**

(12) **EUROPEAN PATENT APPLICATION**

(43) Date of publication:
**14.03.2007 Bulletin 2007/11**

(21) Application number: **05077088.2**

(22) Date of filing: **12.09.2005**

(51) Int Cl.:
*B01D 61/36* (2006.01)   *B01D 63/02* (2006.01)
*B01D 65/08* (2006.01)   *B01D 69/02* (2006.01)

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(71) Applicant: **Nederlandse Organisatie voor
Toegepast-Natuurwetenschappelijk Onderzoek
TNO
2628 VK  Delft (NL)**

(72) Inventors:
• **Fontalvo Alzate, Javier
5625 JC  Eindhoven (NL)**
• **Vorstman, Marius Anton Gijsbert
5211 EP's Hertogenbosch (NL)**
• **Keurentjes, Johannes Theodorus Faustinus
5708 EH  Helmond (NL)**
• **Wijers, Johannes Gerardus
5964 AW  Breugel (NL)**

(74) Representative: **Winckels, Johannes Hubertus F.
et al
Vereenigde
Johan de Wittlaan 7
2517 JR  Den Haag (NL)**

(54) **Pervaporation process and apparatus for carrying out same**

(57)    The invention is directed to a pervaporation processes as well as to apparatuses for carrying out such processes. More in particular, the present invention is directed to improvements in pervaporation processes by improving mass transfer.

According to the present invention the feed stream for a pervaporation process contains vapour and liquid. An apparatus for carrying out the process according to the invention comprises a boiler for evaporating a fraction of a liquid stream whereby a vapour stream can be obtained, a duct for combining the remaining liquid stream and said vapour to a mixture and for feeding said mixture to a pervaporation unit, which pervaporation unit comprises a membrane and a vacuum pump which is connected to the room that is on the permeate side of the membrane.

The membrane can be a tubular-shaped membrane with slug-flow realized in the lumen.

The membrane further can comprise a catalyst.

EP 1 762 295 A1

**Description**

The invention is directed to pervaporation processes as well as to apparatuses for carrying out such processes. More in particular, the present invention is directed to improvements in pervaporation processes by improving mass transfer.

Pervaporation has emerged as a promising separation technique, for instance for separating aqueous and organic solutions. The heat that is required for the evaporation of the compounds that are removed is generally supplied from the sensible heat carried by the liquid feed. However, the resulting temperature drop has been found to reduce the flux through the membrane. As a consequence, the membrane area required for a given separation is much larger as compared to the hypothetical isothermal case.

In the art, several methods have been suggested to diminish the temperature drop in pervaporation systems, so as to avoid flux reduction. It has *inter alia* been suggested to use a series of alternating pervaporation modules and heat exchangers (see *e.g.* R. Rautenbach et al., J. Membr. Sci. 25 (1985) 25-54). However, such pervaporation systems increase the investment and maintenance costs considerably as compared to a single unit.

It has also been suggested to supply heat directly into the pervaporation module in order to maintain a constant retentate temperature (J. Bausa et al., Ind. Eng. Chem. Res. 39 (2000) 1658-1672). Various designs have been presented to supply energy directly into the pervaporation module, for instance using electrical resistances, see *e.g.* EP-A-0 118 760; or by using external heating with steam or another fluid (see M. Schleger et al., Desalination 163 (2004) 281-286).

Although these methods can improve the pervaporation efficiency, which may result in a reduced membrane area, these known methods have drawbacks; because of safety reasons electrical resistances cannot be applied with flammable media, while external heating in multi-tubular modules requires a system of concentric tubes where the heating fluid is fed to the shell side and the retentate is fed to the annulus of each set of concentric tubes. In general these pervaporation modules have a complex construction increasing the maintenance and total cost.

It is an object of the present invention to provide a pervaporation process and apparatus that solves at least in part the above-mentioned disadvantages. It was found that this object can be met by carrying out the pervaporation process using a feed stream that is partly vaporized. Thus in a first aspect the present invention is directed to a pervaporation process wherein a feed stream is at least partly vaporized prior to separating it in a pervaporation unit.

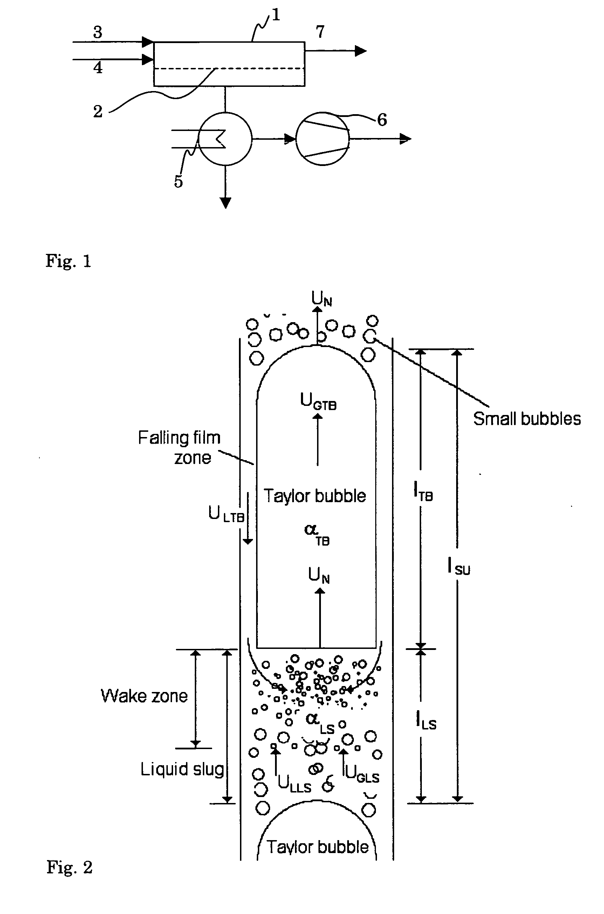

In a first embodiment the present invention is directed to a pervaporation process wherein a feed stream is separated into a permeate stream and a retentate stream by a membrane, wherein said feed stream contains vapour and liquid. It was found that vapour-liquid two-phase operation offers an effective way to control the retentate temperature drop in pervaporation units. Two-phase operation may be created by vaporizing a fraction of the feed or retentate. The vapour flow is then combined with the liquid feed stream and the combined streams are fed to the pervaporation unit. The term "pervaporation" as used herein refers to a separation process which is based on difference in interaction with the separating membrane. Typically, the components are separated by the membrane by applying a lower pressure on the filtrate side than on the feed side of the membrane. A typical configuration comprises a vacuum pump that is situated on the filtrate side of the membrane, as schematically depicted in Figure 1. By applying a pressure that is below the feed pressure, one of the components will preferentially pass through the membrane. Subsequently it may be condensed on the filtrate side, while the retentate is decreased in its concentration of this component.

Instead of, or in addition to, applying a so-called "sweep"-gas or -vapour may be useful in operating the pervaporation unit. The permeate is diluted with the sweep-stream and consequently the partial pressure of the permeating species is low.

The invention is furthermore directed to a separation unit that comprises a pervaporation unit that can be fed with a mixture of vapour and liquid. Such a separation unit (1) is schematically depicted in Figure 1. It comprises at least one membrane (2). A feed stream comprising liquid (3) and vapour (4) is fed to unit (1). The vapour in the feed stream may be obtained e.g. by vaporizing a small part of the liquid feed stream. Vacuum pump (6) is used to decrease the pressure on the permeate side of the membrane, *e.g.* below 0.1 bara, for instance from 0.01 to 0.05 bara. Condenser (5) is used to cool and condensate the permeate, which may then be collected. A purified retentate stream (7) is obtained.

The vapour phase that is present in the feed in accordance with the present invention has a multifunctional role, especially in low liquid flow rate applications. It reduces temperature and concentration polarization near the membrane surface by promoting turbulence, thus increasing the pervaporation efficiency. Surprisingly it was found that also the selectivity of the pervaporation may increase in accordance with the present invention.

The vapour may also supply latent heat to the liquid by condensation. Two-phase operation in multi-tubular systems can be applied for flow inside tubes or for transversal flow externally to tubes in co-current or counter-current operation. Pervaporation units with counter-current vapour-liquid operation could be placed directly inside a distillation column replacing a section of packing or trays.

Pervaporation processes may be characterized by the two quantities permeance and selectivity. For dehydration separations, the water permeance $\Gamma_w$ is defined as the ratio of the water flux ($J_w$) through the membrane and the water partial vapour pressure difference over the membrane.

$$\Gamma_w = \frac{J_w}{x_w \gamma_w p_w^v - y_w p^p} \qquad\qquad (1)$$

.

where $p_w^v$ is the vapour pressure of pure water, $p^p$ is the total pressure on the permeate side and $\gamma_w$ is the water activity coefficient in the retentate.

The intrinsic selectivity and the process selectivity are defined according to equation 2. x and *y* are the molar fractions in the liquid and permeate sides, respectively, for water w and the other compound i.

$$\alpha = \frac{y_w / x_w}{y_i / x_i} \qquad\qquad (2)$$

For the intrinsic selectivity, the local retentate molar fractions on the membrane surface can be used. The feed liquid molar fraction can be used for the process selectivity.

The concentration polarization index (CPI) can be defined as the ratio of the local water concentration on the membrane surface and the local water concentration in the liquid bulk. Temperature polarization can be defined as the local difference between the bulk temperature in the retentate and the membrane surface temperature.

The process of the present invention may be carried out in different flow conditions. Several two-phase flow regimes exist, see for instance Y. Taitel et al., AIChE Journal 26 (1980) 345-354. One typical regime is the slug flow regime, a schematic representation of a unit that is operated under slug flow conditions is shown in Figure 2. In the slug flow regime a Taylor bubble zone can be distinguished with a falling liquid film, and a liquid slug zone (see also R.C. Fernandes, et al., AIChE Journal 29 (1983) 981-989). The liquid slug consists of a wake zone and a remaining liquid slug. Mass and heat transfer to the membrane surface in the slug flow regime are mainly determined by the liquid and gas velocities and the length of each zone.

The falling film is formed when liquid from the liquid slug zone is pushed to the tube wall by the Taylor bubble forming a thin film that travels downwards around the bubble. The velocity field in the liquid slug ahead of the Taylor bubble then changes. The effect of the rising bubble on the liquid velocity field ahead of it is restricted to distances of about 1*D* from the bubble tip, where D is the diameter of the tube. The falling film enters into the liquid slug zone generating a zone of high turbulence called wake zone. The size of the wake zone is typically between 5D and 6D (A.M.F.R. Pinto et al., Experiments in Fluids 31 (2001) 643-652). The high velocities in the wake zone decrease, in a sufficiently long liquid slug (>6D-7D), to low values causing a relatively calm liquid behind the wake zone.

In one embodiment the feed stream is at least partly vaporized prior to feeding it into the pervaporation unit containing the membrane. The vaporization can be done using known means, such as a boiler or heat exchanger.

It is also possible to produce the vapour by means of a distillation column, in particular the reboiler thereof. In this embodiment, the pervaporation unit is placed inside the distillation column or connected to it such that the vapour/liquid mixture is contacted with the pervaporation unit.

The amount of vapour in the feed stream usually depends on the amount of component to be removed and is typically from 0.1 - 10, preferably from 1-5 wt.%, more preferably from 2-4 wt.%, based on the total weight of the feed stream. In principle the heat that is needed for the vaporization of the component to be removed (the permeate), may be supplied by condensation of the vapour present in the feed stream. So, at equal heat of vaporization, the amount of vapour in the feed stream is in general equal to, or larger than, the amount of component to be removed.

Vapour flow rates that are too low are generally not desirable because they do not provide for the desired effect with respect to mixing and improved mass transfer. Values that are too high on the other hand, are generally not cost-effective because the heat that is required to vaporize a high fraction does not generally lead to corresponding improvements in permeativity and/or selectivity.

The membranes as applied in the present invention may have any suitable size and shape, such as tubular membranes and flat sheets, or sheets that are configured in a certain fashion, *e.g.* spirally wound up. Furthermore, so-called modules can be used. Generally, tubular membrane structures are preferred because they result in a more compact design of the apparatus.

For tubular membranes, the selective membrane layer may be present on the inside of the tubes or on the outside.

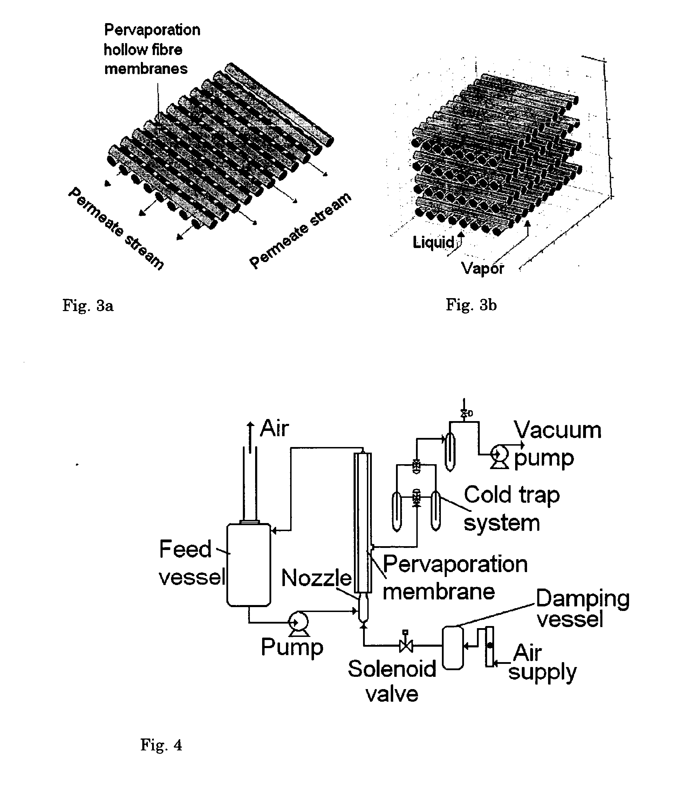

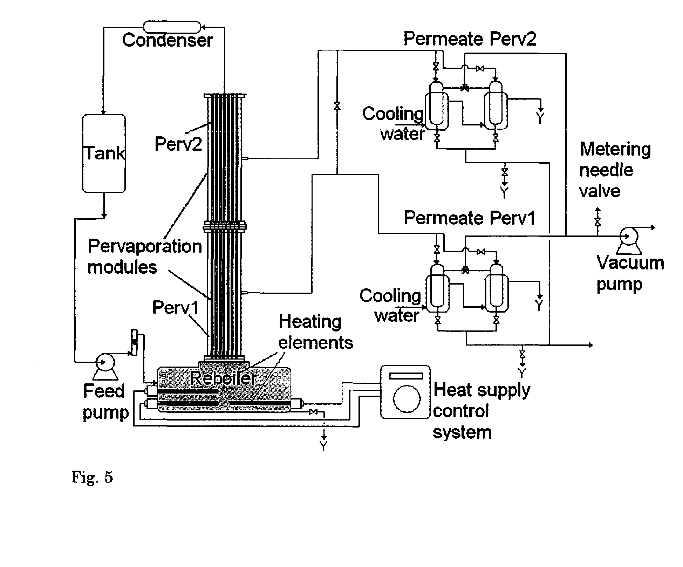

When the selective membrane layer is on the inside of a tubular membrane, the vapour and liquid flow through the tube enhances mass transfer to the membrane surface. The permeate flows on the outside. This embodiment is schematically illustrated in Figures 4 and 5. Several kind of two-phase regimes could occur in the process of the present invention depending on the liquid and vapour flow rates, from slug flow to churn and annular flow.

If the selective membrane layer is on the outside of a tubular membrane, the vapour and liquid can be lead over the outside of the tubular membranes in co-current or counter-current mode. The permeate will then flow on the inside of the membrane tubes.

Different terms may be employed to describe tubular membranes (viz. membranes having the shape of a tube), depending in particular on their diameter (see for instance "Nomenclature and symbols in membrane science and technology", G.H. Koops, Sept. (1995)"). Hollow fibre membranes are typically tubular membranes having diameter < 1.5 mm. Capillary membranes are typically tubular membranes having a diameter of 1.5 to 5 mm. Tubular membranes having a diameter > 5 mm are often simply referred to as membrane tubes. All of these tubular membranes can be used in accordance with the present invention.

In one specific embodiment of the present invention the pervaporation step is carried out using hollow tube-shaped membranes because they allow for compact and flexible design and good separation. If hollow tube-shaped membranes are used it is preferred to apply the separation membrane (typically in the form of a coating) on the outside surface thereof, because this provides a membrane surface area that is considerably larger when compared with hollow tube-shaped membranes coated on the inside. Hollow tube-shaped membranes when used in accordance with the present invention preferably have an outer diameter of 0.5 -50 mm, typically a wall thickness 1-2 mm and variable length (typically 0.1 to 1 m or more). Hollow tube-shaped membranes may for instance prepared by dipcoating a hollow tube-shaped membrane support in a suitable solution.

In general, typical dimensions for hollow tube-shaped membranes when used in accordance with the present invention are 0.5-50 mm outer diameter, preferably 1-25 mm, more preferably 3-15 mm, having a wall thickness of typically 0.5 - 5 mm, preferably 1 - 2 mm, *e.g.* about 1.5 mm. The length of the hollow tube-shaped membranes may vary widely depending on the application, *e.g.* from several centimeters, *e.g.* 10 cm to one meter or more.

When hollow tube-shaped membranes with the separation membrane on the outside are used, it is preferred to apply the vacuum for the pervaporation on the inside of the tube, so that the filtrate is collected in the hollow tube-shaped membranes. From there it can be collected in a suitable duct that is in connection with the lumen of the hollow tube-shaped membranes.

It is also possible to combine the pervaporation process of the present invention with chemical reaction. To this end it may be advantageous to apply a catalyst in the membrane or on its surface, such as zeolites, oxides, ion exchange resins or combinations thereof. In this way reactive pervaporation processes, wherein for instance the desired product is separated from the reaction mixture so that the reaction equilibrium shifts to the favourable side. Also solid acids and enclosed homogeneous acids can be applied in or on the surface of the membrane, for instance to bring about a certain chemical conversion.

The pervaporation process according to the invention may be employed for the separation of all kinds of mixtures. An important advantage is the high selectivity and also the high energy efficiency. Preferred applications include those wherein the feed stream is selected from azeotropic mixture, in particular water/ethanol; methanol/methyl-tert-butylether; and isopropyl alcohol/water. The invention may furthermore be employed in acetic acid dehydration; benzene-cyclohexane separation; production of esters; dimethyl carbonate production; dehydration of alcohols; MTBE production; methylisobutylketone production; hexadecyl eruciate production; DMF (dimethylformamide) dehydration or propyl propionate production.

Other examples of processes in which the present invention may find use are separation or purification of alcohols (methanol, ethanol, propanol (both isomers), butanol (all isomers), pentanol (all isomers), cyclohexanol, benzyl alcohol, and the like), separation or purification of ketones (acetone, butanone (MEK), methyl isobutyl ketone (MIBK), and the like), separation or purification of aromatics (benzene, toluene, phenol, and the like), separation or purification of amines (triethylamine, pyridine, aniline, and the like), separation or purification of esters (methyl acetate, ethyl acetate, butyl acetate, and the like), separation or purification of ethers ethyl tert-butyl ether (ETBE), di-isopropyl ether (DIPE), tetrahydrofuran (THF), dioxane, and the like), separation or purification of nitriles, such as acetonitrile, the separation or purification of aliphatics, in particular of $C_3$ - $C_8$ aliphatics, and the separation or purification of chlorinated hydrocarbons (dichloromethane, perchloroethylene, and the like).

An apparatus according to the present invention comprises a boiler for evaporating a fraction of a liquid stream so that a vapour stream can be obtained, a suitable duct for combining the remaining liquid stream and said vapour to a mixture and for feeding said mixture to a pervaporation unit, which pervaporation unit comprises a membrane and a vacuum pump which is connected to the room that is on the permeate side of the membrane.

In a preferred embodiment, the apparatus according to the present invention comprises a multitude of the hollow, tube-shaped membranes, which are arranged in a layer, which layer comprises two or more parallel tube-shaped membranes. This embodiment is schematically depicted in Figure 3a.

It is preferred that the apparatus comprises two or more of the layers arranged in a vertical manner, as schematically indicated in Figure 3b. In this embodiment the longest axis of the hollow tube-shaped membranes of each layer is perpendicular to the longest axis of the hollow tube-shaped membranes of the neighbouring layer or layers. The vacuum pump is preferably connected to the room that is formed by the inside of said hollow tube-shaped membranes.

Different tube inclinations can be used (horizontal, vertical or in between). As compared with the known way of operating, single-phase flow, two-phase flow in accordance will increase the performance of tubular membranes regardless the inclination.

## Examples

Three kinds of experiments were performed: using air in a lab scale setup and using vapour and air in a bench scale pervaporation unit. The influence of the secondary phase on temperature and concentration polarization is demonstrated by measuring flux and selectivity in experiments with air. For the lab scale experimental setup, the extent of concentration and temperature polarization have been also calculated, based on measurements of bubble rise velocity and bubble and liquid sizes. Using vapour, the additional effect of heat supply by condensation is shown in the bench scale pervaporation unit. Dehydration of 1,4-dioxane has been performed in the lab scale setup and dehydration of isopropyl alcohol (IPA) has been carried out in the bench scale setup using silica membranes.

The influence of the addition of a vapour phase on concentration and temperature polarization in a pervaporation process was determined experimentally in a single membrane tube based on the dehydration of 1,4-dioxane and in a bench scale pervaporation unit for dehydration of IPA. The additional effect of heat supply by a condensing vapour was measured for dehydration of IPA in the bench scale pervaporation unit, where vapour was obtained by partially vaporizing the IPA-water feed mixture.

## Lab scale setup; air as secondary phase

The setup for the air-liquid two-phase experiments is shown in Figure 4. The ceramic pervaporation membrane supplied by Pervatech (The Netherlands) consisted of an alumina support tube with 7 mm internal diameter and 50 cm length, internally coated with a silica separation layer. Heating oil was supplied to the jacket of the storage vessel from an external heating bath to control the feed temperature to the pervaporation membrane at 70 °C. The feed liquid, an aqueous solution of 1,4-dioxane with 9.0 wt. % water, was pumped to a chamber at the bottom of the vertically placed membrane. The liquid superficial velocity in the tube was 0.048 m/s (110 mL/min), for both laminar flow and two phase experiments. For two-phase experiments air was injected in the same chamber using a solenoid valve. Liquid and air were recycled to the storage vessel after passing the pervaporation membrane and air was released in the storage vessel.

Prior to the pervaporation experiments the pervaporation tube was replaced by an identical transparent glass tube. A digital camera was positioned at a height of 40 cm from the tube bottom to measure bubble size, liquid slug size and bubble rise velocity at air flow rates between 40 and 250 mL/min and several solenoid valve frequencies. Under the experimental conditions used in this study slug flow was created. The experimental results in the glass tube were used to obtain a desired size of the Taylor bubbles and liquid slugs in the membrane tube by adjusting the vapour flow rate, and the opening and closure frequency of the solenoid valve.

In order to characterize the membrane tube, additional single phase pervaporation experiments were performed in the turbulent regime using high liquid superficial velocities of above 3 m/s. At these superficial velocities the concentration and temperature drop in the liquid and the concentration and temperature polarization on the membrane are negligible.

The permeate side of the experimental setup consisted of a system of cold traps and a vacuum pump, shown in Figure 4. A metering needle valve was used to adjust the vacuum pressure at 10 mbar at the permeate side outside the membrane tube. The vapour at the permeate side was condensed using liquid nitrogen and was weighted as a function of time to determine the total flux. The water concentration in the retentate was measured by Karl-Fischer titration. The water concentration in the permeate stream was measured by gas chromatography using a TCD detector. The feed water concentration was virtually constant during one experiment and was readjusted when necessary.

## Bench - scale setup; vapour as secondary phase

The bench scale unit, built by GTI (The Netherlands) is sketched in Figure 5. Two pervaporation modules identified as Perv1 and Perv2, supplied by Pervatech (The Netherlands), were placed vertically on top of the reboiler. Each membrane module contained 7 pervaporation membrane tubes, which are the same tubes as used in the lab scale setup, in a shell and tube configuration. At the shell side the vacuum was adjusted to 85 mbara. At this pressure cooling water can be used to condense the permeate stream that is collected in independent cold trap systems for each pervaporation module. Single phase experiments and two-phase experiments using air or vapour were performed.

An IPA-water solution of 17 wt % water was fed at 7 L/hr to the reboiler and the membrane module with a feed pump, as shown Figure 5. The heating coil duty in the reboiler was used to control either the liquid feed temperature to the pervaporation modules for single-phase experiments and experiments with air or the vapour feed flow rate for vapor-liquid two-phase experiments using a PID controller. For gas-liquid two-phase pervaporation experiments, air was used with flow rates between 60 and 700 mL/s. The hydrodynamic regimes achieved were different from the lab scale experiments. Calculations according to Taitel *et al.* indicate that slug flow was obtained at low vapour and air flow rates while for higher flow rates churn flow and annular flow were reached. The inlet and outlet temperatures, the permeate pressure in each module and the liquid levels in the reboiler and storage vessel were monitored using the software InTouch®. The liquid-vapor mixture remaining at the top of the pervaporation modules was condensed using cooling water and was recycled to the storage tank. The retentate and permeate water concentrations were measured with Karl-Fisher titration and gas chromatography, respectively. The water content in the liquid feed was monitored and was kept constant by recycling the permeate stream to the storage tank.

**Results**

**Dioxane - water system; gas - liquid pervaporation**

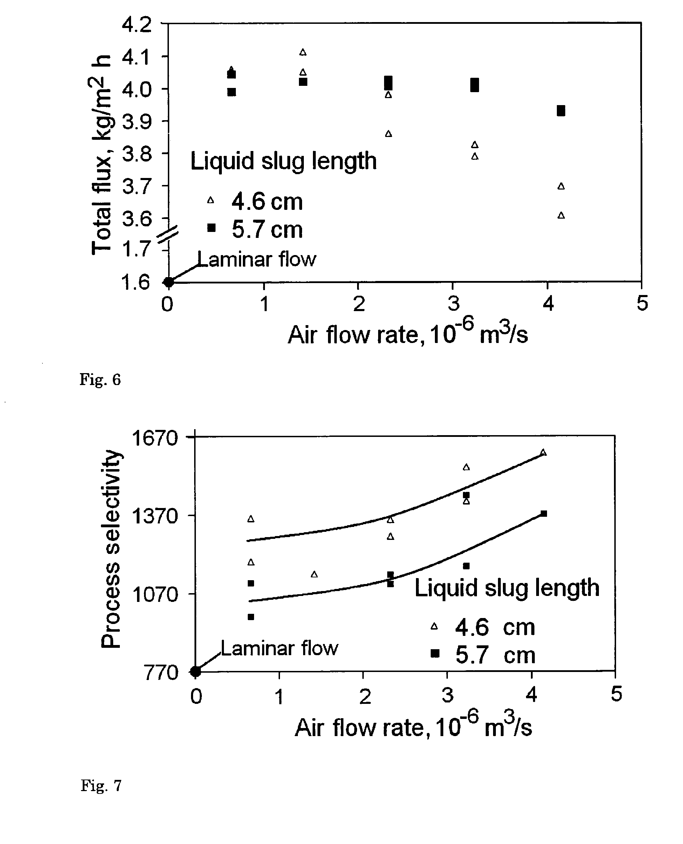

Experimental values of the total flux through the membrane as a function of the air flow rate for two-phase pervaporation in slug flow of 1,4 dioxane at 343 K and 9 wt. % water are presented in Figure 6 for two different liquid slug sizes at a liquid flow rate of 110 mL/min. The average total flux for laminar flow at zero gas flow is shown for comparison. The total flux through the membrane strongly increases when a small amount of gas is injected in the feed stream. Low air flow rates, as low as 0.7 mL/s, are sufficient to increase the total flux twofold as compared to single-phase pervaporation in laminar flow. The retentate temperature drop in the slug flow experiments is around 9 K. Experimental values of the total flux are generally higher for a liquid slug of 5.7 cm than for 4.6 cm. The total flux decreases slightly at increasing gas flow rate, in particular for a liquid slug length of 4.6 cm because of the higher ratio of the Taylor bubble length to the slug unit length. For liquid slugs of 5.7 cm this reduction is less important since the mass transfer coefficient in the wake zone is higher for a liquid slug of 5.7 cm than for 4.6 cm slugs. The velocities in the wake zone of a liquid slug shorter than 7D, i.e. 4.6 cm, are reduced by the next ascending Taylor bubble.

The process selectivity as a function of air flow rate using air-liquid two phase is presented in Figure 7. It shows a low process selectivity for single phase in laminar flow. However, the process selectivity for water increases when air is injected and increases slightly at increasing gas flow rates.

Using a small amount of air, as low as 0.5 mL/s, increases the flux at least twofold and the selectivity 50% compared with laminar single phase experiments.

**Experimental values on slug flow and theoretical prediction of polarization.**

As mentioned above, the mass and heat transfer are calculated based on experimental data of Taylor bubble rise velocity and Taylor bubble and liquid slug sizes. The mass and heat transfer coefficients are used to calculate the concentration and temperature polarization for dehydration of 1,4-dioxane at the experimental conditions of the measurements.

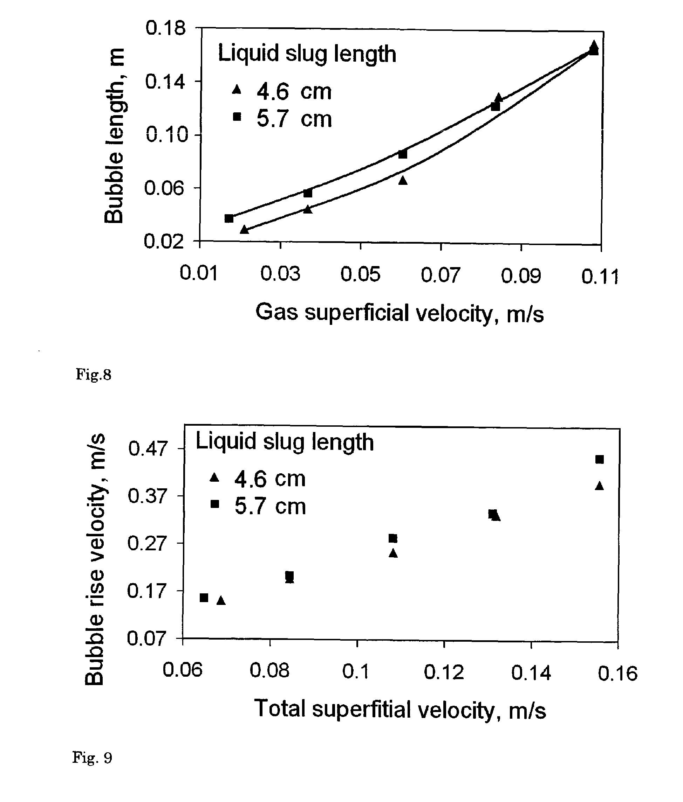

The bubble sizes measured for two different liquid slug sizes as a function of the air superficial velocity for 1,4-dioxane are presented in Figure 8. The bubble size increases with the gas superficial velocity. For the two liquid slug lengths the bubbles sizes were similar at higher superficial velocities. Figure 9 shows the bubble rise velocity as a function of the total superficial velocity for 1,4-dioxane at 343 K and 9 wt. % water. The bubble rise velocity increases at a rate of 2.9 times the total superficial velocity as compared to the theoretical value of 2.3. This higher rate suggests bubble-bubble interactions due to the short liquid slug length used in the experiments.

Experimental values of the total flux and selectivity measured in single phase at turbulent and laminar conditions in the lab-scale setup are presented in Table I. The experimental values in turbulent conditions have been used as intrinsic parameters of the membrane. The intrinsic parameters of the membrane coupled with the mass and heat transfer coefficients in laminar flow have been used to calculate the total flux and selectivity. These calculated results are also included in Table I. It can be concluded that with the intrinsic parameters of the membrane a good prediction of the total flux and process selectivity are obtained. The same intrinsic parameters have been included for the calculation of flux in slug flow regime.

*Table I. Experimental and calculated total flux and selectivity for dewatering of 1,4-dioxane at 70 °C and 9.0 wt. % water in single phase.*

|  | Total Flux kg / m$^2$·h | Selectivity $\alpha$ |
|---|---|---|
| Turbulent flow, experimental | 5.1 | 2600 |
| Laminar flow, experimental ♣ | 1.6 | 779 |
| Laminar flow, calculated ♣ | 1.7 | 718 |
| ♣ Feed flow rate is 110 ml/min | | |

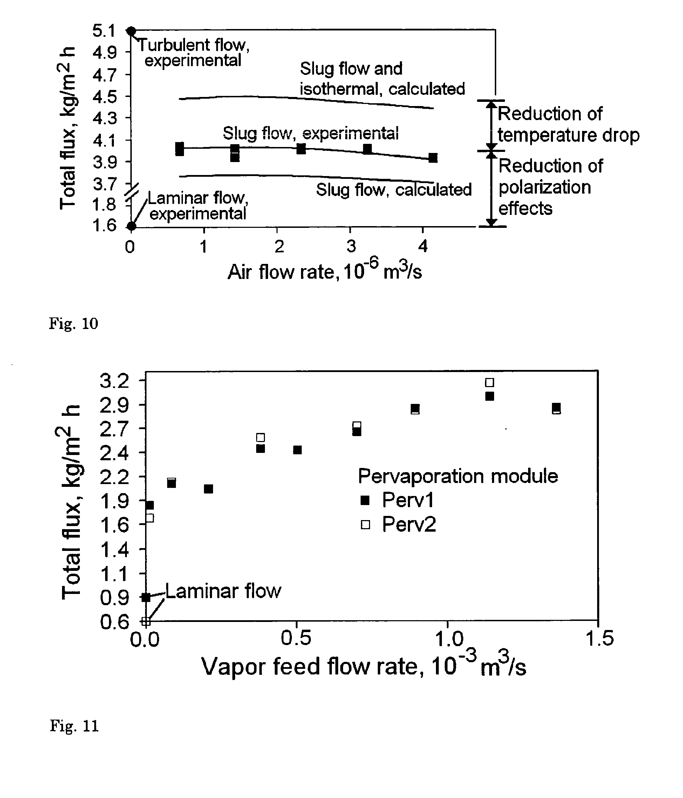

A comparison between calculated (predicted) and experimental values of the total flux for air-liquid two-phase pervaporation in slug flow for dewatering of 1,4-dioxane at 343 K is presented in Figure 10 (9 wt. % water at a liquid slug length of 5.7 cm) for slug flow together with experimental values of the total flux for single phase in the turbulent and laminar flow regime and the total fluxes in slug flow regime. Calculated values of total flux for slug flow with isothermal conditions are also included. All calculated and experimental values for slug flow are for a liquid slug length of 5.7 cm. Good predictions of the total flux for slug flow have been obtained with a maximum difference of 6 %. For liquid slug lengths of 4.6 cm similarly good prediction, have been obtained. However, the predicted process selectivities are 40 % higher than the experimental values.

The calculated concentration polarization index and temperature polarization are 0.39 and 5.8 K, respectively, for laminar flow experiments. Under slug flow conditions, the concentration polarization index increases to at least 0.83 and the temperature polarization reduces at most 1.8 K. The addition of gas has reduced concentration polarization more than 50% and temperature polarization more than 70% for dehydration of 1,4-dioxane. The total flux in the slug regime using air, with a liquid temperature drop of 8.5 K, is 20 % lower compared with experimental values in the turbulent regime. However, Figure 10 shows that an isothermal operation, e.g. using vapour instead air, in slug flow increases the total flux resulting in a performance that is only 10 % lower than under turbulent conditions.

**IPA - water system; vapor-liquid pervaporation**

The total flux as a function of the vapour feed flow rate is presented in Figure 11 (dewatering of IPA at 353 K and 15 wt. % water) for both pervaporation modules connected in series in the bench scale pervaporation setup with a liquid flow rate of 117 mL/min. In single phase experiments total fluxes of 0.85 and 0.60 kg/m2 h have been measured for Perv1 and Perv2, respectively. In absence of vapor, the 30 % lower performance of Perv2 is mainly due to the liquid temperature drop in the axial direction. The liquid feed temperature to Perv2 is around 9 K lower than to Perv1 reducing the driving force for mass transfer.

Figure 11 shows that when vapour is added to the liquid feed higher fluxes are achieved and the differences in total flux between Perv1 and Perv2 are eliminated. The total flux through the membrane increases at least twofold using relatively low vapour flow rates, as low as 12 mL/s, as compared to single phase laminar flow experiments. The water transport through silica membranes for 1,4-dioxane-water mixtures is higher than for IPA-water mixtures as shown in Figures 6 and 9+3, respectively. The total flux through the membranes increases with increasing vapour flow rates and in general the total fluxes in Perv2 are higher or similar to the fluxes in Perv1.

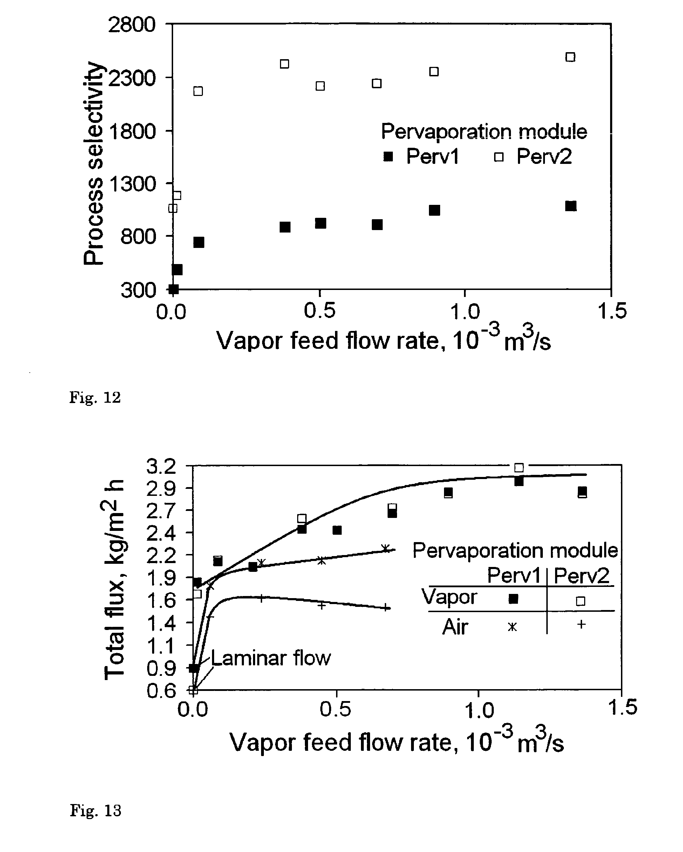

The process selectivity is shown in Figure 12 (dewatering of IPA at 353 K and 15 wt. % water) as a function of vapour flow rate. Vapour flow rates higher than 86 mL/s increase the selectivity twofold as compared to single-phase laminar flow experiments. The process selectivity increases only slightly at higher vapour flow rates.

**Water - IPA system; experimental comparison of two-phase pervaporation using air and vapor.**

Experimental results of the total flux for the dewatering of IPA using air-liquid two-phase pervaporation in the bench scale setup are shown in Figure 13, which shows a comparison of the measured total flux as a function of the air and vapour flow rates for dewatering of IPA at 353.5 K and 15 wt. % water. The lines are drawn to guide the eye. Also experimental results of the total flux using vapour have been included. When air is used Perv2 has a lower performance than Perv1 due to the retentate temperature drop.

The total flux increases around 20% for Perv1 and 40% for Perv2 when a condensing vapour instead air is used (Figure 11+13). Also, using vapour, the differences in flux between the pervaporation modules are eliminated. The maximum obtained total flux through the pervaporation membrane in Perv1 with air is 2.2 kg/m$^2$ h, but this flux increases to 3.1 kg/ m$^2$ h when vapour is used.

From the experiments performed on the dehydration of 1,4-dioxane and isopropyl alcohol it follows that small amounts of air or vapour are sufficient to increase the total flux and selectivity in pervaporation modules at least twofold as compared to the performance in single phase laminar flow. For slug flow experiments, the total flux, selectivity, concentration and temperature polarization have been calculated based on experimental data of bubble size, liquid slug size and bubble rise velocity. Good predictions of the total flux and selectivity have been found for single phase and two-phase flow experiments. Compared with laminar flow experiments for the dehydration of 1,4-dioxane, calculations show that concentration polarization and temperature polarization are reduced by 50% and 70%, respectively. Water flux increases by 20% and 40% when vapour instead of air is used for dehydration of isopropyl alcohol in two pervaporation modules connected in series due to the reduction of the liquid temperature drop. Vapor-liquid two-phase pervaporation proves to increase fluxes through internally coated membranes by reducing the liquid temperature drop in pervaporation systems and for relatively long residence times by enhancing mass and heat transfer towards the membrane surface

**Claims**

1. Pervaporation process wherein a feed stream is separated into a permeate stream and a retentate stream by a membrane, wherein said feed stream contains vapour and liquid.

2. Pervaporation process according to claim 1, wherein said feed stream is at least partly vaporized prior to feeding it into a separation unit, which separation unit contains said membrane.

3. Pervaporation process according to any of the previous claims, wherein said feed stream contains 0.1 - 10 wt.% vapour.

4. Pervaporation process according to any of the previous claims, which is carried out in combination with a distillation process in one single column or as an externally connected unit.

5. Pervaporation process according to any of the previous claims, wherein said membrane is present on the outside of a hollow tube-shaped membrane.

6. Pervaporation process according to claim 5, wherein a pressure on the inside of the membrane is applied that is lower than the pressure on the outside of the membrane.

7. Pervaporation process according to claim 1-4, wherein said membrane is in the shape of a flat membrane, optionally spirally wound, optionally plate and frame; or wherein said membrane is present on the inside of a tube-shaped structure.

8. Pervaporation process according to claim 7, wherein said membrane is present on the inside of said tube-shaped structure and the pressure that is applied at the outside of said tube-shape structure is lower than on the inside.

9. Pervaporation process according to any of the previous claims, wherein a catalyst is present on said membrane.

10. Pervaporation process according to any of the previous claims, wherein said feed stream is selected from azeotropic mixture, in particular water/ethanol; methanol/methyl-tert-butylether; isopropyl alochol/water; or wherein said pervaporation process is selected from acetic acid dehydration; benzene-cyclohexane separation; production of esters; dimethyl carbonate production; dehydration of alcohols; MTBE production; methylisobutylketone production; hexadecyl eruciate production; and propyl propionate production.

11. Apparatus for carrying out a process according to any of the previous claims, comprising a boiler for evaporating a fraction of a liquid stream whereby a vapour stream can be obtained, a duct for combining the remaining liquid stream and said vapour to a mixture and for feeding said mixture to a pervaporation unit, which pervaporation unit comprises a membrane and a vacuum pump which is connected to the room that is on the permeate side of the membrane.

12. Apparatus according to claim 9, wherein said membrane is present on the outer surface of a hollow tube shaped membrane.

13. Apparatus according to claim 10, comprising a multitude of said hollow tube shaped membranes, which are arranged in a layer, which layer comprises two or more parallel hollow tube shaped membranes.

**14.** Apparatus according to claim 11, which comprises two or more of said layers arranged vertically, wherein the longest axis of the hollow tube shaped membranes of each layer is perpendicular to the longest axis of the hollow tube shaped of the neighbouring layer or layers.

**15.** Apparatus according to any the claims 10-12, wherein said vacuum pump is connected to the room that is formed by the inside of said hollow tube shaped membranes.

**16.** Apparatus according to any of the claims 10-13, wherein said hollow tube shaped membrane has an outer diameter of 0.5 -50 mm.

**17.** Use of a vapor-liquid two-phase feed in pervaporation processes.

Fig. 1

Fig. 2

Fig. 3a

Fig. 3b

Fig. 4

Fig. 5

Fig. 6

Fig. 7

Fig.8

Fig. 9

Fig. 10

Fig. 11

Fig. 12

Fig. 13

European Patent
Office

**EUROPEAN SEARCH REPORT**

Application Number

EP 05 07 7088

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 294 827 A (KURARAY CO., LTD) 14 December 1988 (1988-12-14) | 1-4,7, 10,17 | INV. B01D61/36 |
| Y | * column 4, line 37 - column 5, line 26; claims; example 1 * | 5,6, 12-16 | B01D63/02 B01D65/08 B01D69/02 |
| X | US 5 232 593 A (PEDERSEN ET AL) 3 August 1993 (1993-08-03) | 1-3,7, 10,11,17 | |
| Y | * column 1, line 4 - line 13; examples 1,2 * * column 3, line 25 - line 62 * | 5,6, 12-16 | |
| Y | US 5 174 900 A (NICHOLS ET AL) 29 December 1992 (1992-12-29) * column 27, line 38 - line 48; figures 1-11,24-26 * | 5,6, 12-15 | |
| Y | US 5 512 179 A (BRUESCHKE ET AL) 30 April 1996 (1996-04-30) * column 8, line 29 - line 36; claims 1,2,4; figures * * column 9, line 1 - line 5 * * column 10, line 36 - line 37 * | 5,6, 12-16 | |
| | | | TECHNICAL FIELDS SEARCHED (IPC) |
| | | | B01D |

~~The present search report has been drawn up for all claims~~

| Place of search | Date of completion of the search | Examiner |
|---|---|---|
| Munich | 31 May 2006 | Goers, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent
Office

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☒ Only part of the further search fees have been paid within the fixed time limit. The present European search report has been drawn up for those parts of the European patent application which relate to the inventions in respect of which search fees have been paid, namely claims:

1-7,10-17

☐ None of the further search fees have been paid within the fixed time limit. The present European search report has been drawn up for those parts of the European patent application which relate to the invention first mentioned in the claims, namely claims:

**LACK OF UNITY OF INVENTION
SHEET B**

The Search Division considers that the present European patent application does not comply with the requirements of unity of invention and relates to several inventions or groups of inventions, namely:

1. claims: 1-4,7,10-11,17

   Pervaporation process with liquid-vapor mixture as feed in order to prevent decrease of the temperature on the feed side wherein the feed origins from a distillation column in order to intensify the separation process.
   ---

2. claims: 5,6,12-16

   Pervaporation process with improved distribution of a liquid-vapor feed mixture in the feed chamber by feeding it to the outside of hollow tube-shaped membranes which are arranged in multiple perpendicular layers.
   ---

3. claim: 8

   Pervaporation process with enhanced mass transfer by feeding a liquid-vapor feed mixture to the inside of hollow tube-shaped membranes so that slug flow can be achieved.
   ---

4. claim: 9

   Pervaporation process with a liquid-vapor feed mixture from a reactor wherein a catalyst is present on the membrane in order to eliminate non reacted reactants in the feed.
   ---

**ANNEX TO THE EUROPEAN SEARCH REPORT
ON EUROPEAN PATENT APPLICATION NO.**

EP 05 07 7088

This annex lists the patent family members relating to the patent documents cited in the above-mentioned European search report.
The members are as contained in the European Patent Office EDP file on
The European Patent Office is in no way liable for these particulars which are merely given for the purpose of information.

31-05-2006

| Patent document cited in search report | | Publication date | Patent family member(s) | | Publication date |
|---|---|---|---|---|---|
| EP 0294827 | A | 14-12-1988 | AT | 116153 T | 15-01-1995 |
| | | | BR | 8802849 A | 03-01-1989 |
| | | | DE | 3852575 D1 | 09-02-1995 |
| | | | DE | 3852575 T2 | 04-05-1995 |
| | | | US | 4894163 A | 16-01-1990 |
| US 5232593 | A | 03-08-1993 | US | 5366625 A | 22-11-1994 |
| US 5174900 | A | 29-12-1992 | NONE | | |
| US 5512179 | A | 30-04-1996 | DE | 4410243 C1 | 29-06-1995 |
| | | | DK | 673671 T3 | 27-03-2000 |
| | | | EP | 0673671 A1 | 27-09-1995 |
| | | | JP | 7256060 A | 09-10-1995 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0118760 A

### Non-patent literature cited in the description

- **R. RAUTENBACH et al.** *J. Membr. Sci.,* 1985, vol. 25, 25-54
- **J. BAUSA et al.** *Ind. Eng. Chem. Res.,* 2000, vol. 39, 1658-1672
- **M. SCHLEGER et al.** *Desalination,* 2004, vol. 163, 281-286
- **Y. TAITEL et al.** *AIChE Journal,* 1980, vol. 26, 345-354
- **R.C. FERNANDES et al.** *AIChE Journal,* 1983, vol. 29, 981-989
- **A.M.F.R. PINTO et al.** *Experiments in Fluids,* 2001, vol. 31, 643-652
- **G.H. KOOPS.** *Nomenclature and symbols in membrane science and technology,* September 1995